(19) Europäisches Patentamt
European Patent Office
Office européen des brevets

(11) EP 1 878 955 A1

## (12) EUROPEAN PATENT APPLICATION

(43) Date of publication:
**16.01.2008 Bulletin 2008/03**

(51) Int Cl.:
*F16J 15/32* *(2006.01)*

(21) Application number: **07252437.4**

(22) Date of filing: **14.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **14.07.2006 GB 0613989**

(71) Applicant: **Rolls-Royce plc**
**London**
**SW1E 6AT (GB)**

(72) Inventor: **Williams, David Stephen**
**Chesterfield**
**Derbyshire S40 3HS (GB)**

(74) Representative: **Gunn, Michael Alan**
**Rolls-Royce plc**
**P.O. Box 31**
**Derby DE24 8BJ (GB)**

(54) **Leaf seals**

(57) The benefits of leaf seals with respect to providing sealing in gas turbine engines is well known but wide scale applicability is hindered by the costs and manpower necessary for assembly of leaf seals. By utilising a concertina fold of a band or strip 50, 80 in which leaf seal elements 51, 52 are defined with leafs seal sections 52, 82 and spacers 53, 83 defined at tilt angles appropriate for the eventual lay angle in a leaf seal assembly more automated manufacture of leaf seal assemblies is achieved. The means by which the leaf seal sections 51, 81 are formed ensures that the spacers 53, 83 have a thickness greater than the leaf seal element 82a and generally side portions are provided with folding sections 56, 86 which are sacrificially removed during forming of leaf tufts 140 for final assembly within leaf seal assembly 1.

Fig.5.

EP 1 878 955 A1

## Description

The present invention relates to leaf seals and more particularly to leaf seals utilised in gas turbine engines.

Leaf seals are formed from sections of leaf material appropriately presented in order to create a seal surface from juxtaposed seal edges of respective seals in an assembly. Typically the leaf seals are arranged circumferentially about a rotating shaft in order to present the seal edges and therefore the seal surface towards that shaft in order to provide a seal barrier. Typically, spacer members are provided between each seal in order to correctly arrange the seal membranes for presentation of the seal edges and therefore the seal surface. These spacers may be independent components or integrally formed with each leaf seal. The seal edges and so the seal surface effectively floats upwards and downwards relative to a rotating surface.

It will be understood that assembly of leaf seals is relatively complex in terms of the number of seals in the assembly and the importance of correctly aligning and spacing leaf seals in order to achieve best effect. In such circumstances leaf seal assemblies are time consuming and demanding in terms of manpower requirements. More recently formation of leaf seals using a pleated band or strip has been proposed and is described in International patent publication No. WO 015933802 (Alstrom Power NV). In this arrangement a metal strip is essentially stamped in order to define a plurality of leaf sealing elements and the strip or band then folded in order to create by concertina compression a leaf seal which is then mounted within a housing for presentation towards a surface to be sealed. Unfortunately, such an arrangement is not ideal in that the edges of leaf seal elements are not generally efficiently presented towards the surface to be sealed and each seal element is substantially flat and abuts against itself such that in compression there is significant strain on the folded section at the corners of each seal element and inadequate control of space in between elements for best sealing effect. It will be understood that leaf seals depend upon the space in between the seal edges in order to be effective. If leaf seal edges are not effectively suspended, then effectively a solid seal surface is created by the seal edges which will be ineffective.

In accordance with the present invention there is provided a method of forming leaf seals comprising etching leafs in a strip, each leaf etched at a tilt angle to create a step when each leaf is concertina folded against its adjacent neighbour and folding the strip whereby the leaves are juxtaposed to present a seal surface formed by each seal edge of each leaf.

Alternatively, in accordance with the present invention there is provided a method of forming leaf seals comprising etching leafs in a strip, each leaf having a spacer section and spacers for the leafs defined by removal of at least part of the remainder of at least some of the leafs.

Typically, some of the leaves have all of the strip removed except for the spacer. Advantageously, the strip is etched to define fold lines between each leaf. Typically, each fold line is a thinner section than the remainder of the leaf seal.

Typically, the strip has excess material removed in order to define leaf sections or define a top edge or define a plenum aperture in each leaf which aligns to form a plenum chamber in an assembled leaf seal assembly. Generally the thin section which forms the fold line between leaf seals is removed upon final forming of a leaf seal assembly.

Generally, the method also incorporates presenting the strip in a housing in order to retain respectively seal positions relative to each other.

Generally, when the strip is located within the housing further portions of the strip may be removed.

Embodiments of the present invention will now be described by way of example and with reference to the accompanying drawings in which:

Fig. 1 is a schematic perspective view of a leaf seal assembly;

Fig. 2 is a schematic illustration of a single leaf seal profile in accordance with the present invention;

Fig. 3 is a schematic illustration of an alternative leaf seal profile in accordance with the present invention;

Fig. 4 is a schematic plan view of two leaf seals juxtaposed in accordance with the present invention;

Fig. 5 is a schematic front view of a strip formed in accordance with a first embodiment of the present invention;

Fig. 6 is a perspective view illustrating concertina folding of the first embodiment of the present invention depicted in Fig. 5;

Fig, 7 is a schematic side view illustrating lay angle with respect to leaf seals in accordance with the present invention;

Fig. 8 is schematic plan view of an alternative strip utilised in accordance with the present invention to form a leaf seal assembly;

Fig. 9 is a schematic view of the alternative strip formed in accordance with Fig. 8;

Fig. 10 is a schematic illustration of respective leaf seal and spacer combinations typical with regard to leaf seal assemblies formed in accordance with the present invention;

Fig. 11 is a schematic illustration with regard to assembly of leaf tufts in accordance with the present invention;

Fig. 12 is a schematic illustration depicting assembly of leaf elements or tufts with spacers using a brazing wire.

Fig. 13 is a schematic illustration of forming a leaf assembly utilising a forming tool in accordance with the present invention;

Fig. 14 illustrates a leaf seal tuft formed in accordance with the present invention subsequent to folded edge machining; and,

Fig. 15 illustrates leaf profiles formed in accordance with the present invention to avoid wedge gaps.

As indicated above, leaf seals have the potential to replace brush and labyrinth type seals due to their potentially longer life and lower leakage levels. Leaf seals essentially comprise numbers of leaf elements or sections secured together such that the seal edges are essentially presented towards the surface in order to create a seal.

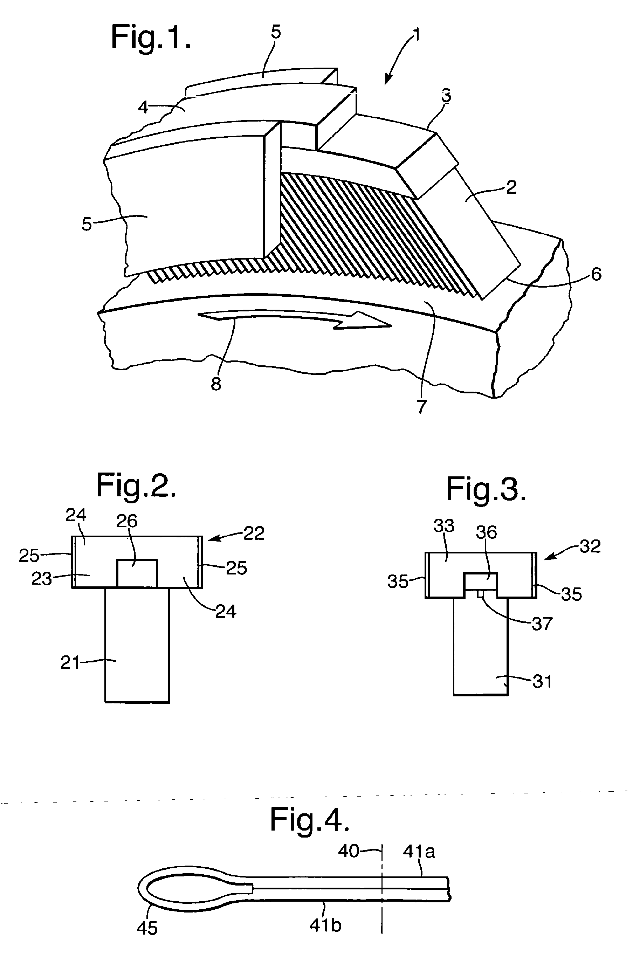

Fig. 1 provides a schematic illustration of a typical leaf seal. Thus, as can be seen a leaf seal assembly 1 comprises seal elements 2 extending from spacer elements 3 secured in a housing comprising a backing ring 4 with side plates 5. The seal leaf elements 2 present seal edges 6 towards a surface 7 of a rotating component generally rotating in the direction depicted by arrowhead 8. In such circumstances it will be appreciated that the leaves 2, and in particular the seal edges 6 of the leaves 2 act against the surface 7 in order to create a seal across the assembly 1. It will be understood that each leaf section 2 will generally be compliant in order to adjust with rotation of the surface 11 to ensure a good sealing effect is created. The spacers 3 are generally required in order to ensure that flexibility is available to appropriately present the leaf seal elements 2 towards the surface 7 which, as illustrated, is generally with an inclined angle between them.

It will be appreciated that accurate positioning and forming of the leaf seal elements 2 in the assembly 1 is important and time consuming but nevertheless is necessary in order to achieve sealing efficiency. As outlined above it is has been proposed to provide concertina folded leaf elements as described in international patent publication No. WO 015933802 (Alstrom Power NV). These arrangements are simple planar leaf seal arrangements. In short such concertina folding as previously described can provide a basic leaf seal assembly but the efficiency of such assemblies is limited.

The present invention provides an improved technique for manufacture of leaf seal assemblies and the leaf seal assembly itself. As previously a strip or band of suitable material for forming seal elements as leaves is obtained. This material may be obtained by rolling or photo-chemical machining (PCM) to a required size. These processing stages of rolling or photo-chemical machining define leaf seal profiles which are utilised in order to create the seal assembly. A rolling technique is relatively cheap particularly for high volume production, but it will be understood that the below described techniques with regard to obtaining variable thickness in the profile is limited. Photochemical machining is a more expensive process but offers greater versatility with respect to thickness profiling of the strip or band in order to achieve greater seal efficiency. This additional versatility can be utilised in order to provide detailed surface profiles to permit inter leaf pressure feed or exact spacer/leaf thickness ratios to ensure correct leaf geometry in use.

Fig. 2 provides a schematic illustration of a typical basic leaf profile 22. The profile 22 comprises a leaf or seal section 21 with a spacer section 23 from which the seal section 21 extends. In the profile 22 depicted in Fig. 2 the spacer section 23 includes side arms 24 either side of the seal section 21 with thin folding sections 25 so that the profile when folded in a concertina fold is appropriately presented. It will be understood that the side arms facilitate folding and assembly of the seal leafs or elements in a seal assembly. The profile 22 depicted in Fig. 2 has a hole 26 above the seal section 21 such that in combination with other spacers in profiles 22 in a concertina folded assembly, a chamber is provided for pressure feed distribution within the leaf seal element assembly when finally formed.

As can be seen the leaf seal section 21 is typically but not necessarily rectangular and in order to provide sealing efficiency is generally thinner than the remainder of the profile 22. The section 21 forms the aerodynamic surface which is required for operation of the seal.

The spacer section 23 is generally thicker and has a number of functions as outlined below. The spacer sections 23 provide inter leaf spacing to facilitate seal flexing and adjustment for sealing effect. The spacer sections 23 also provide a surface for joining adjacent leafs together through a brazing or welding or other assembly process to retain the concertina fold as described later. The spacer sections 23 also provide a location for the hole 26 which, as indicated above, in combination with other holes in adjacent spacer sections create an annular pressure chamber in a seal assembly as described later for pressure equalisation.

The present invention relates to provision of a leaf seal assembly formed by concertina folding of a strip. In such circumstances leaf profiles must be folded one upon the other, and this is achieved by creation of thinner folding sections 25 in between leafs. Although described as thinner this is relative to the spacer sections 23 and the folds 25 will generally have a thickness similar to that of the seal element 21.

Fig. 3 illustrates a refined or alternately profile 32 where additional support is provided at the mid point of the pressure feed channel plenum chamber. This profile 32 also allows a reduced stress concentration at interfaces between thin and thick sections in the profile 32. However, as previously a working or leaf element section 31 is secured to a spacer 33 which has side arms and folding sections 35 to allow a concertina folding of a number of elements in order to form a seal assembly as described previously. An additional feature 37 is provided generally in a top edge of the seal element 31 centrally within the plenum hole 36. This feature 37 generally has a thicker section and provides reinforcement and support as described above.

As indicated above generally the leaf sections 21, 31 are produced by a photochemical machining process. This photo-chemical machining process will etch away the original strip thickness in order to create the desired thickness of the section 21, 31 along with the orientation of that section 21, 31 in the strip as well as provide the holes 26, 36 to form a plenum pressure feed channel as described previously.

In accordance with the present invention the leaves 21, 31 will be profiled such that large numbers of leaves are joined edge to edge to form a long strip. Thus, in manufacture the present method provides for taking a strip or band of appropriate material and machining that band or strip to create leaves in accordance with the present invention. The present invention provides for the machining process to achieve spacers 23, 33 as well as tilt angle presentation of the leaf seal elements in the strip for better operational efficiency in use.

Fig. 4 illustrates an exaggerated fold between two leaf sections in accordance with the present invention. Thus, leaf section 31a is forced into abutment and brazed or welded or otherwise secured in position against leaf section 41b. The folding section 45 is as depicted rounded to reduce stressing whilst the section to the left of broken line 40 is machined away after brazing the leaf sections 41a, 41b together. Thus, in this manner it will be understood that significantly more leaf sections are folded together around fold sections to create a tuft as described below which can be incorporated in an appropriate housing to create a leaf seal assembly.

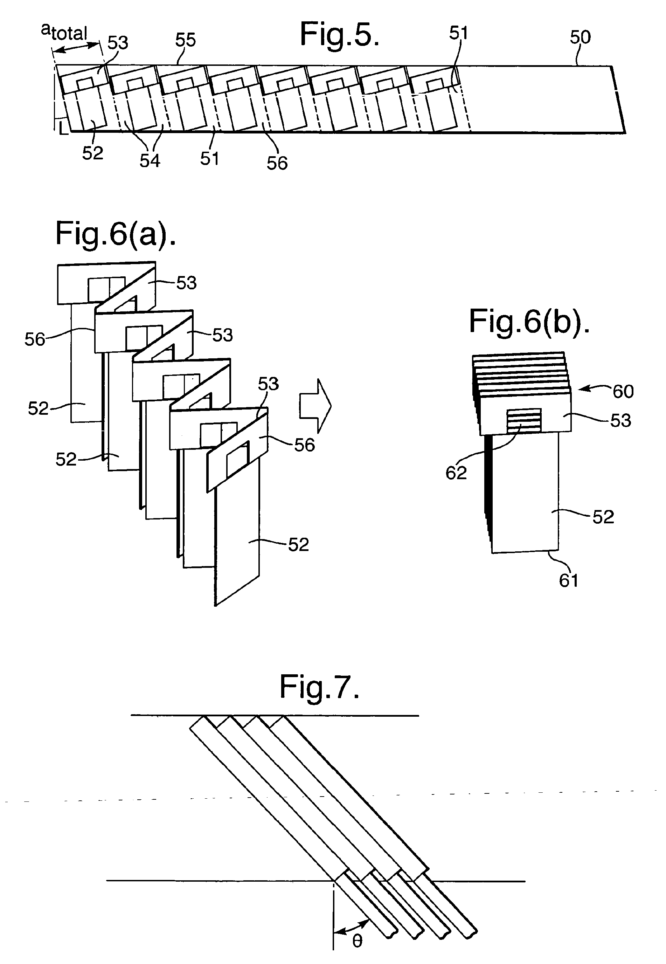

In accordance with the present invention as indicated provision of spacers and tilt angling achieves better performance. The lay angle θ, in the eventual leaf assembly is achieved by provision of a tilt angle, L, to which the leaves are tilted in the strip and as depicted in Fig. 5.

The angle of tilt L, is calculated using the formula below:

$$\tan L = \frac{t \tan \theta}{a_{total}}$$

where t = the thickness of the leaf (and spacer, if applicable) at the root, θ = the required lay angle, $a_{total}$ = total width of the leaf (and side arms, if applicable).

It will be understood that tilting of the leaf sections when in strip form will ensure that the correct lay angle is achieved when the leaves are folded as described below in relation to Fig. 7.

As can be seen in Fig. 5 a strip 50 is appropriately machined by photochemical etching or rolling in order to create respective leaf seal sections 51. Each leaf seal section 51 comprises a seal element leaf 52 and a spacer 53. In such circumstances within the strip or band 50 due to the tilt angle L, which is exaggerated for convenient demonstration, there are waste areas in relation to sides 54 and top 55 which will be removed as required. As indicated above, the spacer sections 53 are generally of thicker section than the operational leaf seal elements 52 and this is achieved in a base strip 50 through appropriate machining such as photo-chemical machining. Between each leaf section 51 a fold section 56 is provided to enable a concertina fold to be performed to create leaf seal tufts which are combined into a whole assembly as described later. Tufting is necessary in order to ensure that manageable lengths of strip 50 are used although it will be understood that with a sufficiently long strip a complete "daisy chain" of leaf sections may be provided for a complete annular ring of leaf seal elements to form a leaf seal assembly as required.

Fig. 6 illustrates schematically folding of the leaf sections formed by provision of the folded sections 56 and the removal of the waste areas 54, 55 from the strip 50 depicted in Fig. 5. Thus, as can be seen with the waste areas 54, 55 removed, the spacer sections are still attached at the fold lines 56 in a staggered configuration defined by the overlap spacer 53 edges. It will be understood this overlap as described previously is dependent upon the tilt angle provided when forming the strip 50. As the folding section 56 is of a thinner section a concertina fold can be provided about these sections 56 in order to move through the stage depicted in Fig. 6a to a compressed stack in the form of a leaf seal tuft 60 with juxtaposed spacers 53 presenting the leaf sections 52 at an appropriate lay angle as depicted in Fig. 6b. Essentially, the tuft 60 leans such that bottom seal edges 61 will be appropriately presented in use relative to a seal surface. As described previously, typically a hole 62 is provided in each spacer 53 in order to create a plenum chamber by the juxtaposed spacer sections 53 in order to achieve the desired pressure distribution about a seal assembly in use.

The strip 50 can then be folded to form short linear sections. Three precautions are taken to limit the stress concentration at the fold. Firstly, the thickness of the section is reduced, secondly the radius of curvature is permitted to be relatively large, and thirdly, the fold occurs at the ends of the side arms, which are then subsequently machined off.

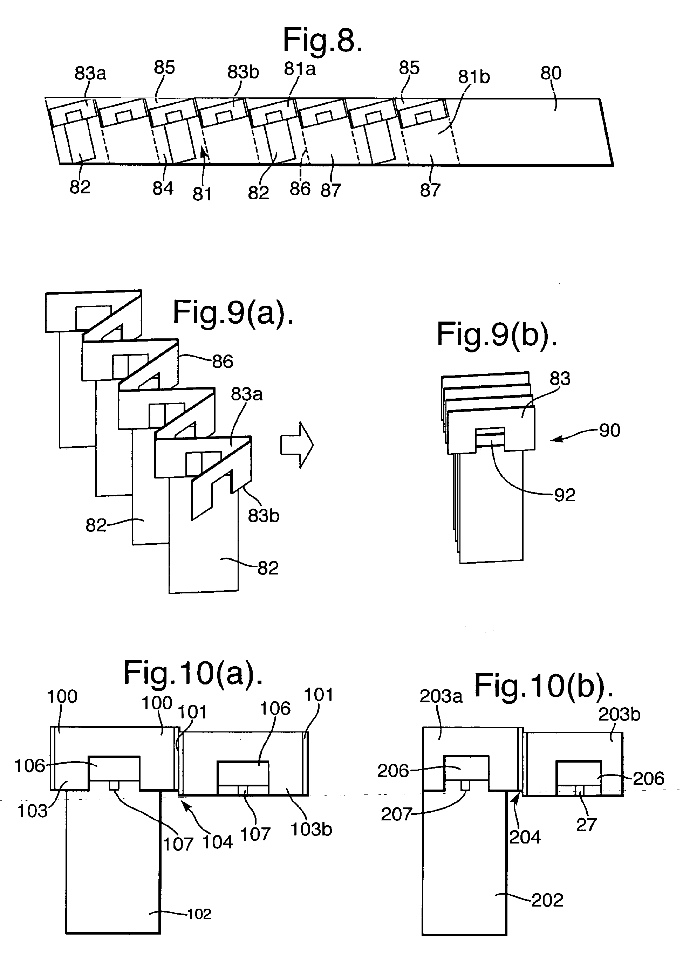

If larger inter-leaf gaps are required then one or more leaves can be omitted from the pattern as shown in Fig. 8 and Fig. 9. Alternatively, if manual assembly of leaf/spacers is required, then individual leaf/spacer folded pairs can be produced, as shown in Fig. 10. Additionally, it may be possible to insert individual spacer elements into the folds between leafs in the strip.

The lay angle feature as depicted in Fig. 7 is determined by the angle L utilised with regard to the strip 50 or similar angle in the missed leaf element embodiment depicted in Figs. 8 and 9. This angle L will allow appropriate presentation of the working leaf elements in an appropriate assembly.

As described above, where inter leaf spacer gaps are required which are greater than permissible by simple etching differentials between the leaf element and the spacer as shown in Figs. 5 and 6, it is possible to create a strip 80 in which leaf elements 81 are again defined between fold sections 86, but alternative leaf sections 8 are arranged such that in leaf section 18a a spacer 83 is provided along with a leaf element 82 such that when waste portions 84, 85 are removed a leaf section 52 extending from the spacer 81a is provided whilst in adjacent leaf sections 81b the whole of the strip 80 other than the spacer 83 is removed so that the area 85 as well as area 87 is removed in order to simply leave a spacer 83b between spacers 83a to which a seal element 82 is attached. The "gap" spacer 83b may have a different thickness to the "seal" spacer 83a.

Formation of the larger inter leaf gap strip 80 as depicted in Fig. 8 is similar to that described in Fig. 6 with regard to strip 50 (Fig. 5). Thus, a concertina fold is performed about fold edge 86 in order to create a seal element tuft 90 which has spacer elements 83 juxtaposed to each other. Again, a pressure equalisation plenum chamber is created by holes 92 in each spacer 83 which extends annularly about the seal assembly to achieve sealing efficiency.

As indicated above where desired particularly during manual assembly individual leaf spacers can be inserted into the concertina fold in between spacers or, as depicted in Fig. 10, leaf tufts created which simply comprises two spacers, one including a seal element and the other simply a spacer appropriately step aligned to achieve the correct lay angle in assembly. In such circumstances a multitude of these leaf/spacer folded pairs will be assembled into a leaf seal assembly, but as indicated previously, this may be time consuming and require extensive manpower.

In Fig. 10 a double side arm arrangement as depicted in Fig. 10a has a spacer 103 with a hole 106 to provide a plenum chamber for pressure distribution in the eventual seal assembly. Again folded sections 101 are provided such that there is a step between the spacer 103a to which a seal element 102 is secured and a seal element 103b which has been machined to remove its seal element 102. In the double arm arrangement depicted in Fig. 10a it will be noted that there is an arm 100 in the spacer 103 either side of the element 102. The stepped alignment 104 will again be determined by the tilt angle in the strip from which the leaf/spacer folded pair is formed.

In Fig. 10b a single arm leaf/spacer folded pair is depicted. Thus, again a spacer 203a is provided to which a seal element 202 is secured with an aperture 206 in order to form a plenum chamber for pressure distribution in use. There is a step between the spacer 203a and a plain spacer 203b without attached seal element 202. Again, there is a fold section 201 in between the spacers 203 in order to form the leaf/spacer folded pair for assembly into a leaf seal assembly as described later.

Both the arrangements of leaf/spacer folded pairs depicted in Fig. 10 may incorporate reinforcing 107, 207 to facilitate assembly strengths.

The leaf tufts are fitted into an assembly jig which has a groove which is sized to ensure the correct lay angle is maintained during the subsequent machining/joining operations. The jig may be linear or curved, although precautions must be taken depending on which is chosen. If a linear assembly jig is used, then any subsequent joining operation must be strong enough to hold the leaves together whilst being reformed but flexible enough to allow the forming to take place. However, if a curve jig is chosen, then the curvature must be less than that required to cause the leaf tips to touch.

The advantage of using a straight jig is that after the leaves are assembled, and welded or brazed, measurements can be made to assess shrinkage of the leaf pack. If this has occurred, then additional leaves can be assembled at the end of the pack before reforming to ensure the correct length of leaf is used to create the correct diameter seal.

Joining the leaf pack together may be achieved through various welding or brazing processes. One option for brazing, is to use gold braze wire. This can be threaded through the leaves and spacers ensuring a consistent, high integrity braze, while allowing sufficient flexibility.

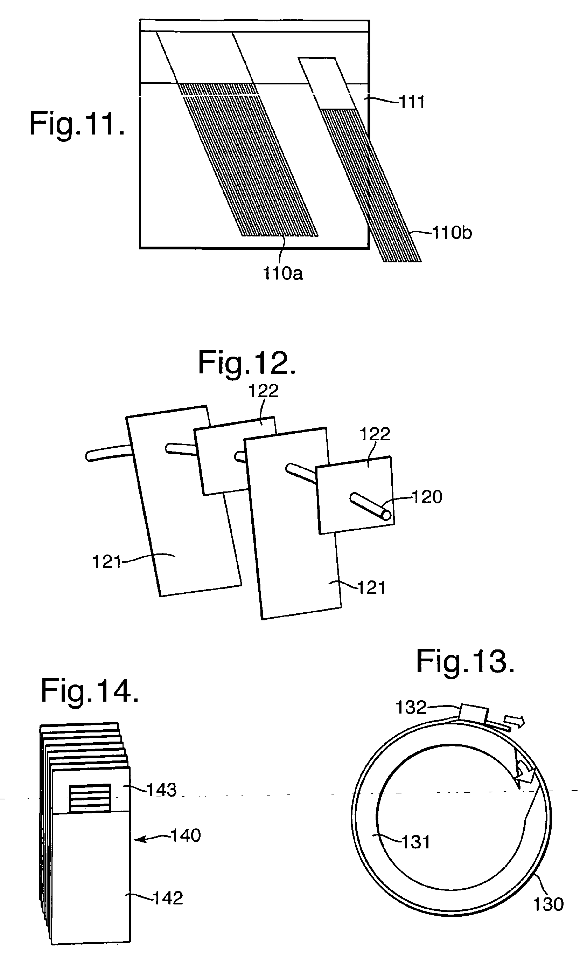

In Fig. 11 a linear assembly of leaf tufts 110 is depicted placed into a jig 111. As indicated previously generally tufts 110 are provided by concertina folding of strips or bands of appropriate material etched or otherwise machined in order to create the lay angle and spacers between seal elements. Although possibly a complete length of seal assembly could be provided by one band or strip of appropriate material which is more convenient to form the eventual leaf seal assembly in a number of tufts which can be more appropriately handled.

Fig. 12 schematically illustrates assembly of leaf elements or tufts 121 with spacers 122 with a braze wire such as gold braze wire as described above. Thus, wire 120 is threaded through the leafs or tufts 121 and spacers 122 and then by applying appropriate heat the braze wire acts to braze association between the tufts/leaf elements 121 and the spacers 122.

The two functions of the forming operation are firstly to achieve the correct sizes for the leaf pack (e.g. outer diameter, concentricity, etc) and secondly to achieve the correct leaf curvature (in the case of the involute seals). The most difficult is to maintain concentricity, especially if a large portion of leaf length is to be in contact. Therefore, if the linear or partially-curved leaf pack is too stiff to manipulate by hand, this can be achieved by using a partially formed seal through a tapered mandrel. The diameter at the larger end can be sized to pass a ring set to a diameter where the leaf tips are yet to touch, while the smaller diameter would be sized to match the required outer diameter (with suitable adjustments for thermal expansion).

Alternatively, a solution similar to a large scale worm drive hose clip (such as those manufactured by L Robinson & Co. (Gillingham) Limited and sold under the registered trade mark "Jubilee") could be used, as shown in Fig. 13. The advantage with this solution is that a range of final diameters can be achieved using the same resizing tool, whereas a tapered mandrel must be sized for each application. However, this tool will not be perfectly round due to an inconsistency at the drive position. The resizing tool 130 holds the seal elements in the form of tufts 131 such that through use of a drive mechanism 132 the diameter of the tool 130 can be decreased in order to bring the elements 131 into a desired diameter and then subsequent welding or brazing or other mechanism utilised in order to retain that position.

Once the elements are formed into the desired annular shape, post weld machining is performed in order to remove excess material such as the side arms described above. It will be appreciated that these side arms are no longer required as the elements are held together through the welds or brazes between the spacers. Fig. 14 schematically illustrates leaf seal elements 142 secured together with spacers 143 in order to create a leaf pack 140 for assembly as described above.

The final stage in accordance with the present method of forming a leaf seal assembly is to assemble the now relatively robust leaf pack or tuft 140 into a solid backing ring and then secure cover plates either side. Securing the leaf packs or tufts 140 in the housing formed by the solid backer ring and cover plates (see Fig. 1) is achieved through welding or brazing or simply by an interference fit with regard to the leaf packs in the backing ring.

By the above method it will be appreciated that using etching/cutting processes it is possible to achieve accuracy and repeatability with regard to the lay angle for leaf elements and then remove excess material in order to define arms inside of the eventual leaf element with backing ring. These arms limit the stress applied to the spacer through the thinner folding sections and also as indicated above, eventually the arm portions beyond the seal elements are removed once a leaf pack or tuft is secured together through welds between spacers. By such an arrangement a more convenient method of forming a leaf seal is achieved without the need for individual assembly of leaves on a jig which, as indicated, is time consuming and runs the risk of damage to each individual leaf seal.

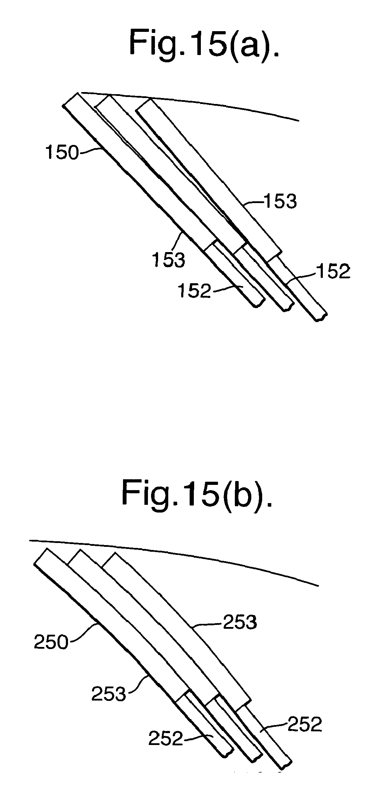

As indicated above, generally leaf seals are annular and therefore must create annular components for assembly around a rotating shaft. Nevertheless the leaf tufts and leaf packs will generally be linearly assembled. When reforming a linear or partially curved assembly it will be understood that the inner diameter of the spacer section will be tightly packed whilst the outer diameter of the spacer section will separate as the curvature increases. This in an unrestrained condition will leave a wedge shaped gap between the leaves. Fig. 15 schematically illustrates this situation with spacers 153 extending to leaf seal elements 152 but with wedge gaps 150. These gaps 150 either indicate stresses upon welds or brazes between the spacers 153 or lead to irregular narrowing of the gap between the leaf seal elements 152 towards a leaf seal edge (not shown).

The problem with respect to gaps 150 can be avoided by allowing the spacer to take an involute shape as depicted in Fig. 15b. Thus, spacers 253 are shaped so that there is no gap 250 between the spacers 253 and therefore closer face to face contact for greater strength of assembly between the spacers 253 and presentation of leaf seal elements 252. In any event, dependent upon the flexibility of the welds securing the spacers together, it may be necessary to reform the spacer sections of the leaf elements into an involute or near involute shape to assist the welding process. The spacers can form an involute shape by selecting appropriate thickness of spacers so as to enforce involute geometry. The spacer curvature forms "naturally" as the curvature of the whole leaf seal assembly is increased.

By the present method it will be understood that the number of mechanical operations required with respect to leaf seal manufacturing assembly are eliminated and the process can be further automated, for example by automated folding of the leaves into "tufts" and automating assembly/welding of the tufts into an assembly jig.

By the present method the concertina folding of a strip or band of suitable material for leaf seal assembly is utilised. In addition by appropriate choice of the lay angle and novel use of photochemical or similar etching or profiling process, concertina folded leaf seal tufts are created which have an appropriate lay angle for the final leaf seal assembly. The arms of the spacer members are generally sacrificial in addition to the folding sections. Thus, any stressing in these parts which may affect final leaf seal performance is removed.

**Claims**

1. A method of forming leaf seals comprising etching leafs (51) in a strip (50), each leaf etched at a tilt angle (6) to create a step when each leaf is concertina folded against its adjacent neighbour and folding the strip whereby the leaves are juxtaposed to present a seal surface formed by seal edges of each leaf.

2. A method as claimed in claim 1 wherein the strip is etched to define fold lines (56) between each leaf.

3. A method as claimed in claim 2 wherein each fold line is a thinner section than the remainder of the leaf seal.

4. A method as claimed in claim 3 wherein the thin section which forms the fold line between leaf seals is removed upon final forming of a leaf seal assembly.

**5.** A method as claimed in any preceding claim wherein the strip has excess material removed in order to define leaf sections (52) or define a top edge or define a plenum aperture (62) in each leaf which aligns to form a plenum chamber in an assembled leaf seal assembly.

**6.** A method as claimed in any preceding claim wherein the method also incorporates presenting the strip in a housing in order to retain respectively seal positions relative to each other.

**7.** A method as claimed in claim 6 wherein when the strip is located within the housing further portions of the strip may be removed.

**8.** A method of forming leaf seals comprising etching leafs in a strip, each leaf having a spacer section (83) and spacers for the leafs defined by removal of at least part of the remainder of at least some of the leafs.

**9.** A method as claimed in claim 8 wherein some of the leaves have all of the strip removed except for the spacer.

**10.** A method as claimed in claim 8 or claim 9 wherein the strip is etched to define fold lines between each leaf.

**11.** A method as claimed in claim 10 wherein each fold line is a thinner section than the remainder of the leaf seal.

**12.** A method as claimed in claim 11 wherein the thinner section which forms the fold line between leaf seals is removed upon final forming of a leaf seal assembly.

**13.** A method as claimed in any of claims 8 to 12 wherein when the strip has excess material removed in order to define leaf sections or define a top edge or define a plenum aperture in each leaf which aligns to form a plenum chamber in an assembled leaf seal assembly.

**14.** A method as claimed in any of claims 8 to 13 wherein the method also incorporates presenting the strip in a housing in order to retain respectively seal positions relative to each other.

**15.** A method as claimed in any of claims 8 to 14 wherein the strip is located within the housing further portions of the strip may be removed.

**16.** A leaf seal assembly formed in accordance with a method as claimed in any of claims 1 to 15.

# Fig.1.

5
4
5
1
3
2
6
8
7

# Fig.2.

24
26
22
25
23
25
24
21

# Fig.3.

33
36
32
35
35
37
31

# Fig.4.

40
41a
45
41b

# Fig.5.

# Fig.6(a).

# Fig.6(b).

# Fig.7.

## Fig.8.

## Fig.9(a).

## Fig.9(b).

## Fig.10(a).

## Fig.10(b).

Fig.11.

111

110b

110a

Fig.12.

122

122

120

121

121

Fig.14.

143

140

142

Fig.13.

132

131

130

## Fig.15(a).

150

153

153

152

152

## Fig.15(b).

250

253

253

252

252

**European Patent Office**

## EUROPEAN SEARCH REPORT

Application Number

EP 07 25 2437

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/103536 A (ALSTOM TECHNOLOGY LTD [CH]; HOGG SIMON IAN [GB]; RHODES NIGEL ANTHONY) 3 November 2005 (2005-11-03) | 1-3,5, 7-11,13, 15,16 | INV. F16J15/32 |
| Y | * page 15, line 17 - page 16, line 26; figure 9 * | 4,6,12, 14 | |
| | ----- | | |
| X,D | WO 01/59338 A (ALSTOM POWER NV [NL]; URLICHS KARL [DE] ALSTOM SWITZERLAND LTD [CH]; U) 16 August 2001 (2001-08-16) | 1,4,6, 12,14 | |
| Y | * page 9, paragraphs 3,4 - page 12, paragraph 1; figures 4,5,7 * | 4,6,12, 14 | |
| | ----- | | |

TECHNICAL FIELDS
SEARCHED (IPC)

F16J

The present search report has been drawn up for all claims

| Place of search | Date of completion of the search | Examiner |
|---|---|---|
| Munich | 24 October 2007 | Sbaihi, Marc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                 EP 07 25 2437

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2007

| Patent document cited in search report | | Publication date | Patent family member(s) | | Publication date |
|---|---|---|---|---|---|
| WO 2005103536 | A | 03-11-2005 | CN | 1946958 A | 11-04-2007 |
| | | | EP | 1740857 A1 | 10-01-2007 |
| | | | GB | 2413602 A | 02-11-2005 |
| WO 0159338 | A | 16-08-2001 | AT | 257920 T | 15-01-2004 |
| | | | AU | 4642801 A | 20-08-2001 |
| | | | BR | 0108197 A | 29-10-2002 |
| | | | CZ | 20022596 A3 | 15-01-2003 |
| | | | DE | 10006298 A1 | 16-08-2001 |
| | | | EP | 1254331 A1 | 06-11-2002 |
| | | | HU | 0300462 A2 | 28-06-2003 |
| | | | JP | 2004500526 T | 08-01-2004 |
| | | | US | 2003071423 A1 | 17-04-2003 |

EPO FORM P0459

For more details about this annex : see Official Journal of the European Patent Office, No. 12/82

**REFERENCES CITED IN THE DESCRIPTION**

**Patent documents cited in the description**

- WO 015933802 A